# EUROPEAN PATENT APPLICATION

(11) **EP 4 836 099 A1**
(43) Date of publication of application: **04.11.2026**
(21) Application number: 26744831.4
(22) Date of filing: 26.01.2026
(51) Int. Cl.: H01M 10/658, C09K 21/02, D04H 1/58, D04H 1/488, D04H 1/4209, H01M 50/204

(54) **FLAME SHIELDING MATERIAL AND BATTERY PACK USING SAME**

(30) Priority: 31.01.2025 JP 2025015100
(71) Applicant: MAFTEC Co., Ltd., Tokyo 100-0005 (JP)
(72) Inventor: KUBOTA, Yuji, Tokyo 100-0005 (JP); SATO, Takashi, Tokyo 100-0005 (JP)
(74) Representative: Meissner Bolte Partnerschaft mbB
(86) International application number: PCT/JP2026/002330
(87) International publication number: WO 2026/163996

(57) **Abstract**

A flame-shielding material includes an inorganic fiber nonwoven fabric, and a thickness suppression agent with which the inorganic fiber nonwoven fabric is impregnated, and the inorganic fiber nonwoven fabric is held in a state of being compressed in a thickness direction by the thickness suppression agent. The inorganic fiber nonwoven fabric is restored to 60% or more of a thickness thereof before the inorganic fiber nonwoven fabric is impregnated with the thickness suppression agent, due to disappearance of the thickness suppression agent.

## Description

### Technical Field

The present disclosure relates to a flame-shielding material and a battery pack using the flame-shielding material.

### Background Art

In an electric vehicle, a hybrid vehicle, or the like, a battery pack (also referred to as a battery module) in which a plurality of battery cells are connected to each other is mounted as a power source of a driving electric motor.

For such battery cells used in a vehicle, a lithium-ion secondary batteries having high capacity and being capable of high output are mainly used, and there is a risk of ignition due to thermal runaway caused by a collision accident, battery deterioration, or abnormal charging. It is difficult to extinguish battery cells that have undergone thermal runaway, and in order to prevent a chain of thermal runaway and protect passengers, it is necessary to provide a flame-shielding material in the battery pack. The flame-shielding material is required to have heat insulating properties in order to prevent the spread of fire due to thermal diffusion to the outside of the battery pack. For high heat insulating properties, the thickness of the flame-shielding material is preferably greater. On the other hand, the flame-shielding material mounted on the battery pack needs to be as thin as possible due to space constraints. Since the heat insulating properties of the flame-shielding material decrease as the thickness thereof decreases, the heat insulating properties and the mountability are in a trade-off relationship as a result.

Patent Document 1 discloses an inorganic fiber composite material including a sheet-like inorganic fiber molded body and a particle impact resistant layer on at least one side of the inorganic fiber molded body, and having specific particle impact resistance.

Patent Document 2 discloses a heat transfer suppressing sheet including first inorganic fiber having a glass transition point of 800°C or lower and/or first inorganic particles having a glass transition point of 800°C or lower, second inorganic fiber having a glass transition point of 1000°C or higher, second inorganic particles having a glass transition point of 800°C or higher, and an organic binder.

Patent Document 3 discloses a laminate including a layer (A) in which a thermoplastic resin composition (X) and inorganic fiber (Y) are integrated and a layer (B) having a higher thermoelectric coefficient in the thickness direction than the layer (A). The thermoplastic resin composition (X) contains a thermoplastic resin (a) and a thermally expandable flame retardant (b1).

### Citation List

### Patent Literature

[Patent Document 1] WO 2024/034628
[Patent Document 2] WO 2023/127904
[Patent Document 3] WO 2024/085233

### Summary of Invention

### Technical Problem

In order for the inorganic fiber composite material described in Patent Document 1 to have sufficient heat insulation performance, it is necessary to increase the basis weight of the inorganic fiber molded body, and the thickness of the inorganic fiber molded body increases. When the thickness of the inorganic fiber molded body is large, mountability is deteriorated.

Patent Document 2 describes a technique of thinly processing a heat transfer suppressing sheet by combining inorganic fibers of an inorganic fiber molded body with an inorganic binder or a resin. However, since the inorganic binder does not disappear by heating, even when the inorganic fiber molded body is heated, the binding force of the inorganic fibers by the inorganic binder does not decrease, and the inorganic fiber molded body maintains its thinness. When the thickness of the inorganic fiber molded body is small, the heat insulating properties are low.

In the technique described in Patent Document 3, the thermally expandable substance contained in the molded body containing the thermoplastic resin composition (X) and the inorganic fiber (Y) expands at the time of flame-shielding to increase the thickness of the thermally expandable substance, thereby exhibiting a heat insulating effect. On the other hand, from the viewpoint of the dispersion state and expansion control of the thermally expandable substance, it is difficult to reliably and uniformly increase the thickness of the molded body.

One of the problems to be solved in the present disclosure is to provide a flame-shielding material having mountability and heat insulating properties, and a battery pack having such a flame-shielding material.

### Solution to Problem

The present disclosure encompasses, for example, the subject matter described below.

### Aspect 1.

A flame-shielding material including:
an inorganic fiber nonwoven fabric; and
a thickness suppression agent with which the inorganic fiber nonwoven fabric is impregnated, in which
the inorganic fiber nonwoven fabric is held in a state of being compressed in a thickness direction by the thickness suppression agent, and
the inorganic fiber nonwoven fabric is restored to 60% or more of a thickness of the inorganic fiber nonwoven fabric before the inorganic fiber nonwoven fabric is impregnated with the thickness suppression agent, due to disappearance of the thickness suppression agent.

### Aspect 2.

The flame-shielding material according to Aspect 1, in which
the inorganic fiber nonwoven fabric is a needle blanket containing an alumina/silica fiber.

### Aspect 3.

The flame-shielding material according to Aspect 1, in which
the thickness suppression agent contains a thermoplastic resin.

### Aspect 4.

The flame-shielding material according to Aspect 3, in which
the thickness suppression agent contains a flame retardant.

### Aspect 5.

The flame-shielding material according to Aspect 1, in which
a basis weight of the inorganic fiber nonwoven fabric is in a range of from 400 g/m² to 1400 g/m².

### Aspect 6.

The flame-shielding material according to Aspect 1, in which
a GBD of the inorganic fiber nonwoven fabric in a compressed state is 0.47 g/cm³ or less.

### Aspect 7.

A battery pack including:
a plurality of battery cells;
a battery case accommodating the plurality of battery cells; and
the flame-shielding material according to any one of Aspects 1 to 6 and accommodated in the battery case.

### Brief Description of Drawings

FIG. 1 is a perspective view of a flame-shielding material according to an embodiment.
FIG. 2 is a schematic diagram of a battery pack according to the embodiment.
FIG. 3 is a graph showing the flame temperature at the time of heating with a burner and the temperature change of a SUS plate with time when each flame-shielding material sample is used.
FIG. 4 is a graph showing changes in the temperature of the SUS plate with time when the samples of the flame-shielding materials shown in FIG. 3 are used.

### Description of Embodiments

As used herein, the singular forms "a," "an" and "the" are intended to include the plural forms as well, unless the context clearly indicates otherwise.

In the present specification, "comprising" is a concept including "consisting essentially of" and "consisting of".

In the numerical ranges described in stages in the present specification, the upper limit value or the lower limit value of a numerical range of a certain stage can be optionally combined with the upper limit value or the lower limit value of a numerical range of another stage. In a numerical range described in the present specification, the upper limit value or the lower limit value of the numerical range may be replaced with a value illustrated in Examples or a value that can be uniquely derived from Examples. Further, in the present specification, numerical values connected by "to" mean a numerical range including the numerical values before and after "to" as a lower limit value and an upper limit value.

Embodiments encompassed by the present disclosure will be further described below. The embodiments described below are merely examples of typical embodiments of the present disclosure, and the scope of the invention is not limited thereby.

The present disclosure provides a flame-shielding material including an inorganic fiber nonwoven fabric, and a thickness suppression agent with which the inorganic fiber nonwoven fabric is impregnated, in which the inorganic fiber nonwoven fabric is held in a state of being compressed in a thickness direction by the thickness suppression agent, and the inorganic fiber nonwoven fabric is restored to 60% or more of a thickness thereof before the inorganic fiber nonwoven fabric is impregnated with the thickness suppression agent, due to disappearance of the thickness suppression agent.

### Inorganic Fiber Nonwoven Fabric

The inorganic fiber nonwoven fabric is a sheet-like fiber assembly having a predetermined thickness, and examples thereof include an inorganic fiber blanket (also referred to as "blanket") and a mat formed by a papermaking process. Since the inorganic fiber nonwoven fabric has elasticity (cushioning properties), when compressed, a repulsive force is generated to restore the original thickness.

The inorganic fiber nonwoven fabric is preferably a needle blanket. The needle blanket is an inorganic fiber nonwoven fabric subjected to needling treatment. By the needling treatment, not only a strong inorganic fiber nonwoven fabric in which the inorganic fibers constituting the inorganic fiber nonwoven fabric are entangled with each other is obtained, but also the thickness of the inorganic fiber nonwoven fabric can be adjusted.

When the inorganic fiber nonwoven fabric is a needle blanket, it has a plurality of needle marks, that is, a plurality of recesses. The needle marks may be through-holes that penetrate in the thickness direction of the inorganic fiber nonwoven fabric, or may be non-through-holes that do not penetrate.

### Material

The inorganic fibers constituting the inorganic fiber nonwoven fabric are not particularly limited, and examples thereof include ceramic fibers, bio-soluble fibers (alkali earth silicate fibers), rock wool, basalt fibers, potassium titanate fibers, calcium silicate fibers, and glass fibers. Examples of the ceramic fibers include single fibers or composite fibers of silica, alumina, alumina/silica, zirconia containing these, spinel, titania, calcia, and the like. Above all, the inorganic fibers are preferably alumina/silica fibers, and particularly preferably crystalline alumina/silica fibers. When the inorganic fibers are alumina/silica fibers, the composition ratio (mass ratio) of alumina/silica is, for example, preferably in a range of from 60/40 to 98/2, more preferably in a range of from 65/35 to 95/5, and preferably in a range of from 70/30 to 80/20.

### Average Fiber Length

The inorganic fibers have a mean fiber length of preferably 1.0 mm or more, more preferably 2.0 mm or more, and even more preferably 3.0 mm or more. Further, the upper limit is not particularly limited, but is preferably 3.0 × 10³ mm or less, more preferably 1.0 × 10³ mm or less. It is to be noted that the average fiber length of the inorganic fibers is an average value of 300 fibers measured by microscopic observation.

### Average Fiber Diameter

The average fiber diameter of the inorganic fibers is preferably from 3 • m to 15 • m, particularly preferably from 5 • m to 10 • m. The average fiber diameter is an average value of 100 fibers measured by microscopic observation.

### Basis Weight

The basis weight (mass per unit area) of the inorganic fiber nonwoven fabric is preferably 1400 g/m² or less. When the basis weight is within the above range, the thickness of the inorganic fiber nonwoven fabric can be reduced, and a flame-shielding material having improved mountability can be produced. Such a flame-shielding material can be accommodated in a limited space, for example, above the battery cells or between the battery cells.

The lower limit of the basis weight of the inorganic fiber nonwoven fabric is not particularly limited, but is preferably 400 g/m² or more. When the basis weight is within the above range, a flame-shielding material having improved flame-shielding performance (in particular, heat insulating properties) can be produced in terms of the amount of fibers per unit area, that is, the thickness.

The basis weight of the inorganic fiber nonwoven fabric is preferably from 400 g/m² to 1400 g/m² from the viewpoint of achieving both mountability of the flame-shielding material and heat insulating properties.

### Bulk Density

The bulk density of the inorganic fiber nonwoven fabric is preferably 0.100 g/cm³ or more, more preferably 0.125 g/cm³ or more, and particularly preferably 0.130 g/cm³ or more.

The upper limit of the bulk density is not particularly limited, but is preferably 0.200 g/cm³ or less, more preferably 0.190 g/cm³ or less, and particularly preferably 0.180 g/cm³ or less.

When the bulk density is within the above range, the amount of fibers per unit volume is sufficient, so that a flame-shielding material having improved flame-shielding performance (in particular, heat insulation performance) can be produced.

### Thickness

The thickness of the inorganic fiber nonwoven fabric is preferably from 3.00 mm to 10.0 mm.

The thickness of the inorganic fiber nonwoven fabric can be measured, for example, by a measurement method illustrated in the following Examples.

The inorganic fiber nonwoven fabric can be produced, for example, by the method disclosed in paragraphs [0043] to [0064] of WO 2024/034628.

### Thickness suppression agent

The thickness suppression agent is impregnated into the inorganic fiber nonwoven fabric, and acts to restrain the inorganic fibers in the inorganic fiber nonwoven fabric and suppress the thickness of the inorganic fiber nonwoven fabric, that is, the thickness of the flame-shielding material. Examples of thickness suppression agents include, but are not limited to, a thermoplastic resin, a flame retardant, or both of them.

The thickness suppression agent preferably includes a thermoplastic resin. Since the thermoplastic resin is melted by heating, the thermoplastic resin restrains the inorganic fibers in the inorganic fiber nonwoven fabric at normal times, and releases the inorganic fibers from the restraint at the time of heating such as thermal runaway to allow the expansion or restoration of the flame-shielding material. The thermoplastic resin has an advantage of expansion or restoration of the flame-shielding material in contrast to an inorganic binder, which does not disappear or soften by heating.

The thickness suppression agent is preferably a thermoplastic resin having a low viscosity when impregnated into the inorganic fibers constituting the inorganic fiber nonwoven fabric. By using a thermoplastic resin having such physical properties, the thermoplastic resin can be more uniformly impregnated into the entire inorganic fiber nonwoven fabric.

Examples of the thermoplastic resin include, but are not particularly limited to, polyamide, polyurethane, ethylene vinyl acetate (EVA), phenoxy resin, polyolefin, polycarbonate, polyvinyl chloride (PVC), and combinations of two or more thereof. For example, polyamide is preferably used from the viewpoint of heat resistance and strength, and polyolefin (e.g., polyethylene, polypropylene) is preferably used from the viewpoint of cost and moldability.

The flame retardant prevents or suppresses the spread of fire and improves the heat insulating properties of the flame-shielding material. The thickness suppression agent may or need not include a flame retardant, and preferably includes a flame retardant. The flame retardant is roughly classified into a halogen-based flame retardant and a non-halogen-based flame retardant, and the non-halogen-based flame retardant is preferable. Examples of the non-halogen-based flame retardant include phosphorus-based flame retardants (such as phosphoric acid esters and ammonium polyphosphate), metal hydroxides (such as magnesium hydroxide), and polytetrafluoroethylene.

The content of the thickness suppression agent in the flame-shielding material (when there are two or more types of thickness suppression agents, the total amount thereof) is not particularly limited, but is, for example, from 60% by mass to 300% by mass with respect to the mass of the inorganic fiber nonwoven fabric.

The content of the thermoplastic resin (when there are two or more types of thermoplastic resins, the total amount thereof) in the flame-shielding material is not particularly limited, but is, for example, from 60% by mass to 250% by mass with respect to the mass of the inorganic fiber nonwoven fabric.

The content of a flame retardant (when two or more flame retardants are used, the total amount thereof) in the flame-shielding material is not particularly limited, but is, for example, from 0% by mass to 150% by mass with respect to the mass of the inorganic fiber nonwoven fabric. When the flame-shielding material contains a flame retardant, the content of the flame retardant in the flame-shielding material is preferably from 15% by mass to 150% by mass with respect to the mass of the inorganic fiber nonwoven fabric.

### Flame-shielding Material

A flame-shielding material according to the present disclosure includes an inorganic fiber nonwoven fabric and a thickness suppression agent impregnated into the inorganic fiber nonwoven fabric.

The inorganic fiber nonwoven fabric portion of the flame-shielding material is restored to 60% or more of the thickness of the inorganic fiber nonwoven fabric before being impregnated with the thickness suppression agent due to the disappearance of the thickness suppression agent.

In order for the inorganic fiber nonwoven fabric to be restored to a desired thickness when the thickness suppression agent disappears, it is necessary that the inorganic fibers of the inorganic fiber nonwoven fabric are not crushed at the time of restoration (that is, the inorganic fibers of the inorganic fiber nonwoven fabric are not crushed at the time of compression) so that the inorganic fiber nonwoven fabric maintains a repulsive force. When the inorganic fibers are crushed, the state thereof as fibers cannot be maintained, and the inorganic fibers are in a powdered state.

Even if a part of the thickness suppression agent disappears, the flame-shielding material is restored as long as the inorganic fibers are released from the restraint by the thickness suppression agent. Thus, the thickness suppression agent may disappear completely or partially.

In a preferred embodiment, the disappearance of the thickness suppression agent means that the mass of the thermoplastic resin contained in the flame-shielding material after heating is 60% or less of the mass of the thermoplastic resin contained in the flame-shielding material before heating.

The thickness of the flame-shielding material is preferably from 0.50 mm to 15.0 mm, and more preferably from 1.00 mm to 3.00 mm in order to accommodate the flame-shielding material in the battery pack or between the battery cells.

The thickness of the flame-shielding material can be measured by, for example, a measurement method described in the following Examples.

### Restoration Rate

The ratio of the thickness of the flame-shielding material (or the inorganic fiber nonwoven fabric in the flame-shielding material, the same applies hereinafter) after the thickness suppression agent disappears to the thickness of the inorganic fiber nonwoven fabric before impregnation with the thickness suppression agent is referred to as a restoration rate.

The restoration rate can also be easily measured by measuring the thickness of the inorganic fiber nonwoven fabric before impregnation with the thickness suppression agent and the thickness of another flame-shielding material of the same type after disappearance of the thickness suppression agent, and calculating the ratio thereof.

For example, in one embodiment, the thickness of the flame-shielding material after the thickness suppression agent has disappeared is the thickness of the flame-shielding material after the flame-shielding material is heated at 1000°C for one hour.

### GBD of Flame-shielding Material

The GBD (compressed density) of the flame-shielding material of the present disclosure is not particularly limited, but if the GBD thereof is too high, there is a high possibility that the inorganic fibers are crushed when the flame-shielding material is restored by heating (that is, the inorganic fibers of the inorganic fiber nonwoven fabric are crushed during compression). Therefore, the GBD of the flame-shielding material is preferably 0.47 g/cm³ or less. The lower limit value of GBD is not particularly limited, but is, for example, 0.13 g/cm³ or more.

The GBD of the flame-shielding material is calculated by dividing the basis weight of the inorganic fiber nonwoven fabric by the thickness at the time of compression.

In an embodiment of the flame-shielding material of the present disclosure, the thickness of the flame-shielding material after disappearance of the thickness suppression agent is 1.5 times or more the thickness of the flame-shielding material before disappearance of the thickness suppression agent. In a further embodiment, the flame-shielding material according to the present disclosure has a thickness of from 1.00 mm to 3.00 mm before disappearance of the thickness suppression agent and a thickness of more than 3.00 mm after disappearance of the thickness suppression agent, and the thickness after disappearance of the thickness suppression agent is 1.5 times or more the thickness before disappearance of the thickness suppression agent. Such a flame-shielding material has mountability and heat insulating properties, and is suitable for use in a battery cell.

In the flame-shielding material according to an embodiment of the present disclosure, a fire-resistant layer made of an inorganic material may be layered on at least one side of the inorganic fiber nonwoven fabric impregnated with the thickness suppression agent. The fire-resistant layer may be a particle bombardment resistant layer as described in WO 2024/034628. By providing the fire-resistant layer, flame-shielding performance (in particular, particle impact resistance and fire resistance) is improved.

The fire-resistant material layer may be integrated with the inorganic fiber nonwoven fabric by the thickness suppression agent, or may be bonded with an adhesive or the like.

### Method For Producing Flame-shielding Material

A method for producing a flame-shielding material according to the present disclosure includes an impregnation step of impregnating an inorganic fiber nonwoven fabric with a thickness suppression agent, and a solidification step of maintaining a thickness-suppressed state by cooling, drying, or chemically reacting the inorganic fiber nonwoven fabric impregnated with the thickness suppression agent after the impregnation step. The inorganic fiber nonwoven fabric and the thickness suppression agent are as described above, and thus the description thereof is omitted.

The method of impregnating the inorganic fiber nonwoven fabric with the thickness suppression agent is not particularly limited as long as it is a method that allows impregnation of the inorganic fiber nonwoven fabric with the thickness suppression agent, and examples thereof include a method of causing the thickness suppression agent melted by heating to permeate the inorganic fiber nonwoven fabric, a method of applying a liquid containing the thickness suppression agent to the inorganic fiber nonwoven fabric, and a method of injecting a liquid containing the thickness suppression agent into the inorganic fiber nonwoven fabric. The liquid containing the thickness suppression agent is, for example, a solvent in which the thickness suppression agent is dissolved or a dispersion medium in which the thickness suppression agent is dispersed.

### 1. Impregnation Step

The impregnation step using the molten thickness suppression agent includes a heating stage and a pressurizing stage. The heating stage may be carried out before or simultaneously with the pressurizing stage. The heating temperature in the heating stage is not particularly limited as long as it is higher than the melting point of the thickness suppression agent. In the pressurizing stage, the inorganic fiber nonwoven fabric is pressed so that the inorganic fiber nonwoven fabric is compressed in the thickness direction as compared with the inorganic fiber nonwoven fabric before pressurizing.

In one example, an inorganic fiber nonwoven fabric that has been brought into contact with a solid thickness suppression agent (for example, a sheet, film, powder, or pellet containing a thermoplastic resin) is sandwiched between molds, the thickness suppression agent is melted in a heating stage, and the melted thickness suppression agent is impregnated into the inorganic fiber nonwoven fabric in a subsequent pressurizing stage. In another example, an inorganic fiber nonwoven fabric that has been brought into contact with a solid thickness suppression agent (for example, a sheet or film containing a thermoplastic resin) is sandwiched between molds and heated under pressure, that is, heating and pressurizing are performed simultaneously, so that the inorganic fiber nonwoven fabric is impregnated with the molten thickness suppression agent. In the impregnation step, the solid thickness suppression agent may be brought into contact with only one surface of the inorganic fiber nonwoven fabric, or the solid thickness suppression agent may be brought into contact with both surfaces of the inorganic fiber nonwoven fabric. As used herein, a film refers to a thin film having a thickness of less than 250 • m. A sheet refers to a plate-like member having a thickness of 250 • m or more. Powder refers to particles having diameters less than 1 mm. Pellets refer to granular members having diameters of 1 mm or more.

### 2. Solidification Step

In the solidification step using the melted thickness suppression agent, the melted thickness suppression agent is solidified by cooling. Cooling is not particularly limited as long as it is a method that can cool the thickness suppression agent impregnated into the inorganic fiber nonwoven fabric, and examples thereof include air cooling, water cooling, and oil cooling.

The cooling temperature is appropriately selected depending on the cooling method, the type of the thickness suppression agent, and the like, and is a temperature at which the thickness suppression agent impregnated into the inorganic fiber nonwoven fabric is solidified. In the cooling step, the inorganic fiber nonwoven fabric is cooled under predetermined conditions while maintaining the compressed state of the inorganic fiber nonwoven fabric by molds between which the inorganic fiber nonwoven fabric is sandwiched. The molds used in the cooling step may be the same as or different from the molds used in the impregnation step. As a result, the inorganic fiber nonwoven fabric is held in a state of being compressed in the thickness direction by the thickness suppression agent, and the flame-shielding material of the present disclosure is obtained.

In the solidification step using the solvent in which the thickness suppression agent is dissolved or the dispersion medium in which the thickness suppression agent is dispersed, the thickness suppression agent is solidified by drying the solvent or by a chemical reaction.

By selecting the viscosity of the thickness suppression agent or a liquid containing the thickness suppression agent at the time of impregnation into the inorganic fibers constituting the inorganic fiber nonwoven fabric, the degree of compression of the inorganic fiber nonwoven fabric, and the like, those skilled in the art can easily produce a flame-shielding material in which the thickness of the inorganic fiber nonwoven fabric is suppressed in a normal state, and when the thickness suppression agent disappears, the inorganic fiber nonwoven fabric is restored to 60% or more of the thickness thereof before impregnation with the thickness suppression agent.

In the present embodiment, when the inorganic fiber nonwoven fabric is subjected to cutting processing, the impregnation step may be performed before the cutting processing, or the impregnation step may be performed after the cutting processing. The cutting step may be performed before the solidification step or after the solidification step.

### Applications

The flame-shielding material of the present disclosure can be used for various applications including a flame-shielding material for a battery pack. When a battery pack using the flame-shielding material of the present disclosure is installed in an electric mobility vehicle such as an electric automobile, a hybrid automobile, an electric motorcycle, a ship, or a train, even if the battery undergoes thermal runaway and catches fire, initial fire spread can be prevented by the high heat insulation performance.

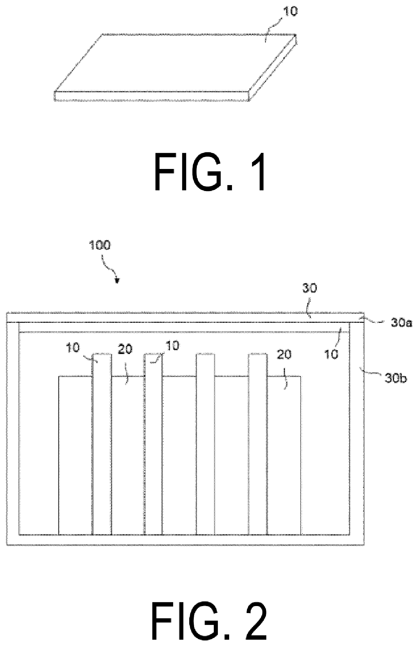

FIG. 1 is a perspective view of a sheet-like flame-shielding material 10 according to an embodiment.

FIG. 2 is a cross-sectional view of a battery pack 100 including a plurality of battery cells 20, a battery case 30 that accommodates the plurality of battery cells 20, and the flame-shielding material 10 of FIG. 1 accommodated in the battery case 30. The battery case 30 may be referred to as a housing. The battery cell 20 may be any of a cylindrical type, a prismatic type, and a pouch-type, and is preferably a prismatic type having a high electric density.

The flame-shielding material 10 may be disposed on the entire surface or a part of the surface of the inner wall of the battery case 30. For example, the battery case 30 includes a cover, that is, an upper member 30a, and a lower member 30b, which is a housing portion, and the flame-shielding material 10 can be used by being attached to an inner surface of the upper member 30a of the battery case 30. In an embodiment, the flame-shielding material 10 is attached to the inner surface of the upper member 30a of the battery case 30 at a certain distance from the battery cells 20. Even if thermal runaway occurs in one battery cell 20, heat propagation to the upper member 30a of the battery case 30 is suppressed by the flame-shielding material 10. Therefore, ignition from the battery case 30 is suppressed, and in a case where the battery pack 100 is mounted on an automobile or the like, passengers can be protected from flame.

The flame-shielding material 10 may be disposed, for example, between the adjacent battery cells 20. In an embodiment, the flame-shielding material 10 is disposed in contact with one or both of the adjacent battery cells 20. In order to suppress thermal runaway of the battery cell 20, a layered structure in which the battery cell 20 is sandwiched between a pair of flame-shielding materials 10 may be employed. Even if thermal runaway occurs in the battery cell 20, propagation of heat to other adjacent battery cells 20 is suppressed by the flame-shielding material 10.

The disclosures of all patent applications and publications cited herein are hereby incorporated by reference in their entirety.

The following Examples are intended for illustration only and are not intended to limit the technical scope of the present invention in any way. Unless otherwise indicated, the reagents are commercially available or can be obtained or prepared according to conventional techniques in the art, known literature procedures.

### Examples

### 1. Production of Flame-shielding Material

### Examples 1 to 4 and Comparative Examples 1 and 3

A laminate was prepared by layering a resin film, a blanket made of a nonwoven fabric of an alumina/silica fiber (600 g/m², manufactured by MAFTEC Corporation), and a PA6I film (polyamide resin film, 250 mm × 250 mm) on a mold in this order from the bottom, and a mold was placed as a pressing plate on the laminate. Next, the laminate was placed, together with the molds, on a hot/cold press and heated. After confirming that the temperature of the molds had risen to a predetermined temperature, pressure was applied from above to compress each laminate to a predetermined thickness (as an example, the target thickness at the time of molding in Table 1). At this time, a crushing margin was controlled by a spacer such that the laminate is crushed to a predetermined thickness. After the compressed state is held for 10 minutes, cooling to normal temperature was performed for approximately 20 minutes, and the compression molded article was removed from the molds to complete the flame-shielding materials according to Examples 1 to 4 and Comparative Examples 1 and 3.

### Example 5

In the above-described method for producing the flame-shielding materials according to Examples 1 to 4 and Comparative Example 1, a nonwoven fabric of an alumina/silica fiber was similarly used, and pellets (PNAH5, Novacell Co., Ltd.) obtained by blending a non-halogen-based flame retardant with polypropylene (PP) were used as a thickness suppression agent.

### Comparative Example 2

A blanket made of a nonwoven fabric of an alumina/silica fiber (manufactured by MAFTEC Corporation, 432 g/m², 300 mm × 300 mm) was immersed in an alumina sol having a solid concentration of 9.6% by mass to impregnate the entire blanket with the alumina sol. The blanket was sandwiched between compression jigs made of punching metal, and compressed to a predetermined thickness of 2.0 mm adjusted by a spacer. The molded article was directly placed in a dryer and dried at 120°C for 10 hours to complete a flame-shielding material according to Comparative Example 2.

The thickness of the flame-shielding material after drying was 2.38 mm, and the impregnated amount of the inorganic binder was 76.1% by mass.

### 2. Various Tests

### (1) Measurement of Thickness of Blanket Before Impregnation

First, the thickness of the blanket before impregnation in each of Examples 1 to 5 and Comparative Examples 1 to 3 was measured. The thickness is calculated as an average value of measured values at six points arbitrarily selected in each blanket.

### (2) Measurement of Thickness of Flame-shielding Material before Resin Removal

Subsequently, the thickness of each of the flame-shielding materials (100 mm × 180 mm) of Examples 1 to 5 and Comparative Examples 1 to 3 before resin removal, that is, the thickness of the molded article was measured. The thickness is calculated as an average value of measured values at six points arbitrarily selected in each flame-shielding material.

### (3) Measurement of GBD

Next, the GBD (g/cm³) of each of the flame-shielding materials of Examples 1 to 5 and Comparative Examples 1 to 3 was measured. As described above, the GBD is calculated by dividing the basis weight of each blanket by the thickness at the time of compression (the thickness of the flame-shielding material before resin removal).

### (4) Mass Ratio of Thickness Suppression Agent to Inorganic Fiber

The mass ratio of the thickness suppression agent to the inorganic fiber is calculated by dividing the mass of the thickness suppression agent (the total mass of the resin component and the flame retardant) by the mass of the inorganic fiber.

### (5) Removal of Resin Component

Next, each of the flame-shielding materials of Examples 1 to 5 and Comparative Examples 1 and 2 was heated at 1000°C for 1 hour to remove the resin component. The thickness of each of the flame-shielding materials (100 mm × 180 mm) of Examples 1 to 5 and Comparative Examples 1 and 2 after removal of the resin components (after restoration) was measured. The calculation of the thickness is the same as the above-described measurement of the thickness of the flame-shielding material.

Further, the state of each flame-shielding material after removal of the resin component was evaluated. Specifically, whether or not powdering of the alumina/silica fiber occurred in the flame-shielding material after removal of the resin component and the presence or absence of warp in the flame-shielding material after removal of the resin component were qualitatively evaluated. Whether or not powdering occurred was evaluated by visual observation and by whether or not the alumina/silica fiber collapsed when touched by hand. The presence or absence of warp was evaluated as present when visible warp was present in the flame-shielding material after removal of the resin component, and evaluated as absent when visible warp was not present.

### (6) Calculation of Restoration Rate

In addition, the ratio of the thickness (mm) of the flame-shielding material after the removal of the resin component to the thickness (mm) of the blanket before the resin impregnation was calculated as a restoration rate (%).

### (7) Heat Insulation Evaluation Test

Next, the flame-shielding material was stacked on a SUS plate (1.00 mm) with the blanket facing downward, the central portion of the blanket was heated with a burner from below the blanket, and the heat insulating properties of the flame-shielding material after resin removal (after restoration) were evaluated. In the evaluation of the heat insulating properties, when the temperature of the SUS plate after 5 minutes from the start of heating was lower than 300°C, it was evaluated as pass, and when it was higher than 300°C, it was evaluated as fail. Since the standard of the temperature at which toxic gas or the like is generated from a coating agent of the battery pack is 300°C, the acceptance criterion of the heat insulation evaluation test was set to 300°C.

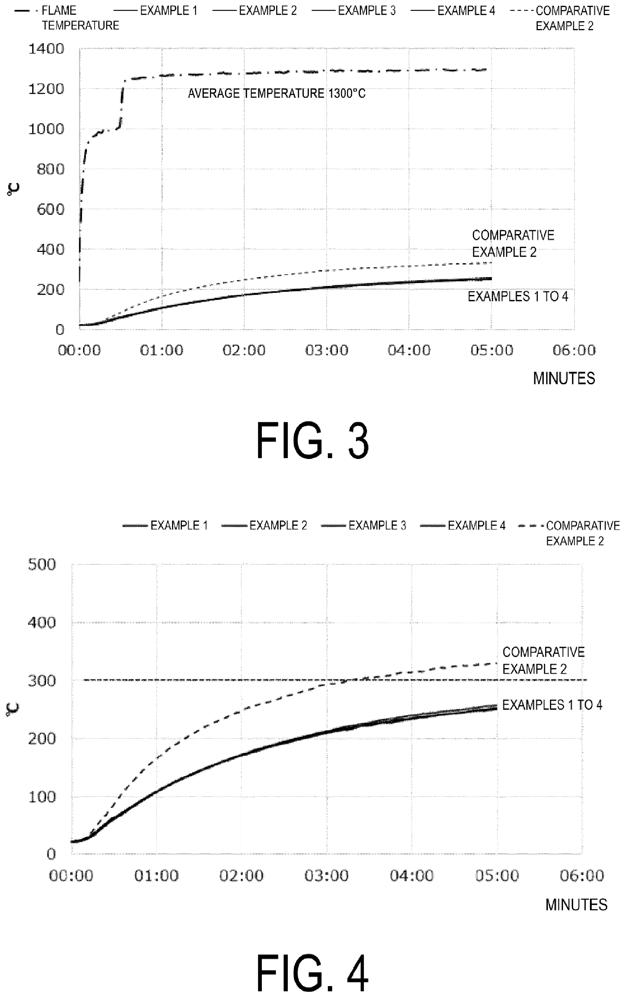

Further, the temperature of the central portion of the upper SUS plate was measured during heating with the burner (FIG. 3).

### 3. Results and Discussion

The results are shown in Table 1.

For the flame-shielding materials of Examples 1 to 5 and Comparative Examples 1 and 2, the thickness before resin removal was within ± 0.5 mm with respect to the target thickness at the time of molding, and was within a thickness range with high mountability of from 1.00 mm to 3.00 mm. On the other hand, for the flame-shielding material of Comparative Example 3, since the mass ratio of the thickness suppression agent to the inorganic fiber was low, with respect to the target thickness 2 mm at the time of molding, the thickness was 3.35 mm and suppression of the thickness was insufficient. Therefore, desirable mountability was not obtained.

Furthermore, in the flame-shielding materials of Examples 1 to 5, in the state after the resin removal, the resin component disappeared, but the alumina/silica fiber was not powdered, and the warp remained. Therefore, it is presumed that the structure and function of the flame-shielding material were maintained. As a result, the restoration rates of the flame-shielding materials of Examples 1, 2, 3, 4, and 5 were 69%, 87%, 88%, 88%, and 80%, respectively. On the other hand, for the flame-shielding material of Comparative Example 1, the alumina/silica fiber was powdered and no warp was present, and it is presumed that the structure and function of the flame-shielding material were deteriorated. As a result, the restoration rate of the flame-shielding material of Comparative Example 1 was 59%. For the flame-shielding material of Comparative Example 2, the alumina/silica fiber was not powdered, but the alumina sol (inorganic binder) maintained the restraint of the alumina/silica fiber, so that the restoration rate was low.

The flame-shielding materials of Examples 1 to 5, in which the structures and functions of the flame-shielding materials were maintained, had higher restoration rates than the flame-shielding materials of Comparative Examples 1 and 2.

As shown in FIG. 4, when the flame-shielding materials of Examples 1 to 4 were used, the temperature of the SUS plate was below 300°C even after 5 minutes from the heating with the burner, and it was confirmed that the heat insulating properties were higher than that of a flame-shielding sheet of Comparative Example 2. A flame-shielding sheet of Comparative Example 1 could not be stacked on the SUS plate because the alumina/silica fiber was powdered.

### [Table 1]

**Table 1**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Basis Weight (g/m2) | | 600 | 600 | 600 | 600 | 600 | 600 | 432 | 600 |
| Thickness (mm) of blanket before impregnation | | 4.39 | 4.48 | 4.69 | 4.51 | 4.53 | 4.37 | 3.78 | 4.78 |
| Target thickness (mm) at the time of molding | | 1.44 | 1.74 | 2.24 | 2.54 | 1.55 | 1.24 | 2.00 | 1.80 |
| Thickness (mm) of flame-shielding material before removal of resin | | 1.40 | 1.75 | 2.18 | 2.46 | 1.56 | 1.26 | 2.38 | 3.35 |
| GBD (g/cm3) | | 0.43 | 0.34 | 0.28 | 0.24 | 0.38 | 0.48 | 0.18 | 0.18 |
| Mass ratio of thickness suppression agent to inorganic fiber | | 130% | 163% | 217% | 249% | 189% | 108% | 76.1% | 32.5% |
| Thickness mm of flame-shielding material after removal of resin | | 3.03 | 3.89 | 4.11 | 3.96 | 3.63 | 2.56 | 2.14 | - |
| State of flame-shielding material after removal of resin | Occurrence of powdering | No | No | No | No | No | Yes | No | - |
| | Presence of warp | Yes | Yes | Yes | Yes | Yes | No | Yes | - |
| Restoration rate (%) | | 69 | 87 | 88 | 88 | 80 | 59 | 57 | - |
| Result of heat insulation evaluation test | | Pass | Pass | Pass | Pass | - | Unassessable | Fail | - |

### Reference Signs List

10 Flame-shielding material, 20 Battery cell, 30 Battery case 100 Battery pack.

## Claims

1. A flame-shielding material comprising:
an inorganic fiber nonwoven fabric; and
a thickness suppression agent with which the inorganic fiber nonwoven fabric is impregnated, wherein
the inorganic fiber nonwoven fabric is held in a state of being compressed in a thickness direction by the thickness suppression agent, and
the inorganic fiber nonwoven fabric is restored to 60% or more of a thickness of the inorganic fiber nonwoven fabric before the inorganic fiber nonwoven fabric is impregnated with the thickness suppression agent, due to disappearance of the thickness suppression agent.

2. The flame-shielding material according to claim 1, wherein
the inorganic fiber nonwoven fabric is a needle blanket containing an alumina/silica fiber.

3. The flame-shielding material according to claim 1, wherein
the thickness suppression agent contains a thermoplastic resin.

4. The flame-shielding material according to claim 3, wherein
the thickness suppression agent contains a flame retardant.

5. The flame-shielding material according to claim 1, wherein
a basis weight of the inorganic fiber nonwoven fabric is in a range of from 400 g/m² to 1400 g/m².

6. The flame-shielding material according to claim 1, wherein
a GBD of the inorganic fiber nonwoven fabric in a compressed state is 0.47 g/cm³ or less.

7. A battery pack comprising:
a plurality of battery cells;
a battery case accommodating the plurality of battery cells; and
the flame-shielding material according to any one of claims 1 to 6 and accommodated in the battery case.
